# EUROPÄISCHE PATENTSCHRIFT

(11) **EP 3 488 107 B1**
(45) Veröffentlichungstag und Bekanntmachung des Hinweises auf die Patenterteilung: **24.06.2020**
(21) Anmeldenummer: 17751011.2
(22) Anmeldetag: 11.07.2017
(51) Int. Cl.: F04B 43/04, F04B 45/047, F04B 17/04, F04B 49/06, F04B 23/06, F04B 35/04, F04B 53/14, H02K 7/18, H02K 41/03, H02K 44/02

(54) **OSZILLIERENDE VERDRÄNGERPUMPE MIT ELEKTRO-DYNAMISCHEM ANTRIEB UND VERFAHREN ZU DEREN BETRIEB**
OSCILLATING DISPLACEMENT PUMP HAVING AN ELECTRODYNAMIC DRIVE AND METHOD FOR OPERATION THEREOF
POMPE VOLUMÉTRIQUE OSCILLANTE COMPRENANT UN ENTRAÎNEMENT ÉLECTRO-DYNAMIQUE ET SON PROCÉDÉ DE FONCTIONNEMENT

(30) Priorität: 22.07.2016 DE 102016008783
(43) Veröffentlichungstag der Anmeldung: 29.05.2019
(73) Patentinhaber: KNF FLODOS AG, 6210 Sursee (CH)
(72) Erfinder: FREY, Raphael, 6020 Emmen (CH)
(74) Vertreter: Mertzlufft-Paufler, Cornelius
(86) Internationale Anmeldenummer: PCT/EP2017/000817
(87) Internationale Veröffentlichungsnummer: WO 2018/015000

(56) Entgegenhaltungen:
- EP-B1- 1 757 809
- JP-A- S58 127 553
- US-A- 5 641 270
- US-A1- 2014 023 532

## Beschreibung

Die Erfindung betrifft eine oszillierende Verdrängerpumpe mit wenigstens einem mobilen Teil, das relativ zu einem festen Teil bewegbar angeordnet und mittels einem Antrieb angetrieben ist und das selbst ein Verdrängerelement der Verdrängerpumpe antreibt, wobei der Antrieb eine Mehrzahl bestromter Spulen und Permanentmagneten hat und jeweils die Mehrzahl von Spulen oder die Mehrzahl von Permanentmagneten an dem mobilen Teil des Antriebs angeordnet sind, wobei die Mehrzahl bestromter Spulen mit sich abwechselnden Wickelrichtungen von Magnetfeldern abwechselnder Richtung durchflossen sind, die von einer Mehrzahl von Permanentmagneten durch abwechselnde Polung erzeugbar oder erzeugt und über die Magnetpole in die Spulen leitbar oder geleitet sind, wobei jede bestromte Spule einen summierbaren Beitrag zu der hierdurch in Axialrichtung des Antriebs entstehenden Kraft leistet, wobei an dem Antrieb wenigstens ein Führungsglied vorgesehen ist, welches dem mobilen Teil eine Bewegung entlang lediglich eines Translationsfreiheitsgrades gestattet, und wobei der Verdrängerpumpe eine Mess- und Steuereinheit mit Datenspeicher und Datenverarbeitungseinrichtung zugeordnet ist, die ein Positionssignal des mobilen Teils und die Stärke des Antriebsstromes als Mess- und/oder Regelgröße verarbeitet. Außerdem betrifft die Erfindung eine Anordnung mehrerer solcher Verdrängerpumpen und ein Verfahren zum Betrieb eines Pumpensystems mit wenigstens einer solchen Verdrängerpumpe.

Elektrodynamische Antriebe sind im Prinzip bekannt, wobei man elektrische Antriebe beispielsweise gemäß M. Jufer (Traite d'electricite, Volume IX, Electromecanique, Presses polytechniques et universitaires romandes, 2004) verschiedenen Kategorien zuordnen kann: Zum einen gibt es einen sogenannten Reluktanz-Antrieb, der z.T. auch elektromagnetischer Antrieb genannt wird und eine Spule mit Anker und Stator, aber keine Permanentmagnete aufweist und zum anderen einen sogenannten elektrodynamischen Antrieb mit Permanentmagnet und Spule, bei welchem die Lorentz-Kraft zum Tragen kommt.

Aus dem Stand der Technik kennt man hierzu etwa aus der CA 2 873 660 A1 bereits eine für Vakuum-Anwendungen ausgelegte Membranpumpe, die aufgrund dieses Umstandes lediglich 1 bar unterschreitende Druckdifferenzen bewältigen kann. Derart geringe Druckdifferenzen sind mit dem dort gezeigten einstufigen Antrieb zu realisieren, werden die Druckdifferenzen größer, werden die Abmessungen des Antriebs diejenigen des Pumpenkopfes überschreiten, so dass die Handhabbarkeit leidet. Überdies ist es mit der aus dieser Offenbarung bekannten Pumpe nicht möglich, den Hub des Antriebs zu überwachen, so dass keine Regelung bezüglich dessen Position oder Geschwindigkeit erfolgen kann.

Weiter ist aus der EP 1 757 809 B1 auch eine Magnetdosierpumpe bekannt, die im obigen Sinne einen Reluktanzantrieb mit Federrückstellung bildet, und bei welcher dessen Ankerposition mittels eines Regelkreises einer Sollwertvorgabe folgt. Diese Membranpumpe mit Hubsensor bewegt sich dabei nur in eine Richtung des Hubes elektrisch, während der Weg in die andere, entgegengesetzte Richtung mittels einer Rückstellfeder getrieben ist. Eine Rückstellfeder ist erforderlich, weil mit einem Reluktanzantrieb mittels Stromumkehr keine Kraftumkehr möglich ist. Bei einem Reluktanzantrieb ergibt sich prinzipbedingt ein Antrieb mit hoher Induktion, also "magnetischer Trägheit", wodurch keine gute Energieeffizienz und auch keine gute Regeldynamik erreichbar sind. Der beim Reluktanzantrieb nicht lineare Zusammenhang von Magnetkraft und Magnetstrom ist dabei nachteilig und regelungstechnisch aufwändig. Weiter weist die Pumpe auch dahingehend Defizite in der Handhabung auf, dass der Fluidpfad in Strömungsrichtung nicht verschlossen werden kann, wenn die Pumpe stromlos ist.

Aus der DE 600 24 154 T2 kennt man bereits eine oszillierende Verdrängerpumpe mit einem polarisierten Reluktanzantrieb, dessen Anker aus einer Vielzahl von Permanentmagneten und dazwischen angeordneter magnetischer Weichpolstücke gebildet ist. Dieser Anker wird von einem Stator umgriffen, der aus einer Vielzahl von spulenförmigen Drahtwindungen und dazwischen angeordneter magnetischer Weichpolstücke aufgebaut ist. In diesem Stator wird ein sich linear bewegendes Magnetfeld erzeugt, durch welches der Anker in entgegengesetzten linearen Richtungen hin und her bewegt wird. An dem einen Ankerende ist ein Kolben als Verdrängerelement vorgesehen, der in einen Pumpraum vorsteht.

Aus der DE 10 2008 030 633 B4 und der JP S 58 127 553 A ist die Verwendung ähnlicher Antriebe, jedoch in Verbindung mit Freikolben-Kraftmaschinen, vorbekannt. Eine Druck- und/oder eine Positionserkennung des Verdrängerelements ist bei dem aus diesen drei letztgenannten Druckschriften vorbekannten Stand der Technik nicht vorgesehen.

Aus der DE 11 2006 002 332 T5 und der US 2012/0098469 A1 kennt man bereits Linearantriebseinheiten, die über einen elektrodynamischen Antrieb verfügen. Die Verwendung dieser vorbekannten Linearantriebseinheiten in Verbindung mit einer oszillierenden Verdrängerpumpe und insbesondere in Verbindung mit einer Membranpumpe ist jedoch in diesen Druckschriften nicht vorgesehen.

Aus der DE 1 613 167 A kennt man bereits einen Membrankompressor, der einen Reluktanzantrieb mit wenigstens einer Antriebsspule hat. Diese wenigstens eine Antriebsspule ist einer Magneteinrichtung zugeordnet, die einen beweglichen Anker aufweist, der mit der Arbeitsmembran des vorbekannten Membrankompressors verbunden ist. Der Anker und die mit ihm verbundene Arbeitsmembran sind in einer vorgegebenen Stellung federnd vorgespannt und die Erregung der Spulen bewirkt eine Bewegung des Ankers in eine zweite Stellung. Die Antriebsspulen können mittels Impulsen erregt werden, um eine Schwingbewegung des Ankers im vorbekannten Membrankompressor zu ermöglichen. Die Antriebsspulen werden bei Ansprechen auf Einstellung eines Servoventils und einer Signalspule erregt, die auf den magnetischen Aufbau gewickelt ist, um intermittierendes und mit vollem Hub erfolgendes Arbeiten des Membrankompressors unter Belastungsbedingungen hervorzurufen und aufrechtzuerhalten. Das Servoventil umfasst eine Eingangssignaleinrichtung, welche den Abstand eines im Servoventil vorgesehenen Lecköffnungsdeckels mit Bezug auf eine Austrittsdüse steuern kann. Ein variabler Widerstand ist durch die Stellung des Lecköffnungsdeckels eingestellt und in den Erregungssteuerstromkreis für den elektromagnetischen Verdichter geschaltet. Ein variabler Widerstand erlaubt es, dass der Deckel und das Anschlussende der Düse Widerstandskontakte bilden, wobei der Widerstand durch den Abstand und den Druckeingriff des Deckels von der beziehungsweise an der Düse bestimmt ist. Die auf den magnetischen Aufbau des elektromagnetischen Antriebes gewickelte Signalspule ist derart geschaltet, dass sie einen Abschalttransistor beziehungsweise ein Abschaltelement in dem Antriebssteuerstromkreis derart vorspannt, dass ein Abschalten der Erregung der Antriebsspulen in Übereinstimmung der Bewegung des Ankers geschaffen wird. Dadurch kann der Abschaltpunkt mit Bezug auf die Ankerstellung während der Hübe direkt mit der Belastung des Membrankompressors, d.h. mit dem Ausgangsdruck, gegen den er arbeitet und der seinerseits durch das Servoventil hervorgerufen wird, verändert werden. Bei kleinen Belastungen kann der Anker schneller beschleunigen und demgemäß ein schnelleres Ansteigen des Signals und ein stärkeres Signal als dasjenige schaffen, das hervorgerufen wird, wenn die Ausgangsbelastung ansteigt. Als Ergebnis erscheint die Abschaltspannung, die in der Signalspule erzeugt und an den Steuerstromkreis angelegt wird, während der Ankerbewegung bei niedrigen Drücken beziehungsweise kleinen Belastungen früher als bei höheren Belastungen und zugeordneten hohen Drücken. Der in dem aus DE 1 613 167 A vorbekannten Membrankompressor verwendete Sensor dient somit nur zum Abschalten des Stroms, bevor der Anker aufschlägt, und somit zur Verminderung des während des Betriebes des vorbekannten Membrankompressors entstehenden Arbeitsgeräusches.

Aus der US 5,641,270 ist eine belastbare Hochpräzisionspumpe vorbekannt, die einen magnetostriktiven Antrieb hat. In diesem magnetostriktiven Antrieb werden Werkstoffe verwendet, die sich verformen, wenn sie von einem Magnetfeld durchströmt werden. Auch der in US 5,641,270 verwendete magnetostriktive Antrieb unterscheidet sich in Konzeption und Funktionsweise wesentlich von dem erfindungsgemäß verwendeten elektrodynamischen Antrieb.

Aus der US 2014/0023532 A1 kennt man bereits eine Membranpumpe, deren Membrane mit Hilfe eines polarisierten Reluktanzantriebes bewegt wird. Während bei dem erfindungsgemäß verwendeten elektrodynamischen Antrieb das Magnetfeld der Permanentmagneten die Spulen direkt durchströmt, werden bei dem in US 2014/0023532 A1 verwendeten polarisierten Reluktanzantrieb die Spulen nicht vom Magnetfeld der Permanentmagnete durchflossen, sondern das Magnetfeld durchließt die weichmagnetischen Stoffe, welche die Spulen umgeben.

Der vorliegenden Erfindung liegt daher die Aufgabe zugrunde, eine oszillierende Pumpe der eingangs erwähnten Art zu schaffen, bei der die Hubgeschwindigkeit, -position oder - beschleunigung auf einfache Weise regelbar ist. Dabei soll sich die erfindungsgemäße Verdrängerpumpe durch ein sehr direktes Ansprechverhalten sowie durch eine energieeffiziente Arbeitsweise auszeichnen.

Die erfindungsgemäße Lösung dieser Aufgabe besteht insbesondere darin, dass die Verdrängerpumpe als Membranpumpe und ihr Verdrängerelement als Membrane ausgebildet sind, und dass der Antrieb als spulenseitig polstückfreier elektrodynamischer Antrieb ausgebildet ist.

Die vorliegende Erfindung sieht vor, dass die erfindungsgemäße Verdrängerpumpe als Membranpumpe und ihr Verdrängerelement als Membrane ausgebildet sind. Um das Verdrängerelement mittels dem mobilen Teil der Verdrängerpumpe antreiben zu können, ist erfindungsgemäß ein spulenseitig polstückfreier dynamischer Antrieb vorgesehen, bei dem die Lorentzkraft direkt zwischen den Magnetfeldern der Permanentmagnete und den bestromten Spulen wirkt. Diese wirkt viel direkter als die Magnetkraft bei Reluktanz-Magnetantrieben aus dem Stand der Technik, weil beim Reluktanzantrieb der ferromagnetische Kreis verzögernd wirkt. Deshalb lässt sich eine Pumpe mit elektrodynamischem Antrieb schneller, dynamischer und auch exakter betreiben. Beim elektrodynamischen Antrieb kann mittels umgekehrter Stromrichtung durch das Umpolen der Spannung die Richtung der Kraft umgekehrt werden, der Antrieb also in beide Richtungen aktiv betrieben und bei Bedarf auch gebremst werden. Dies ist mit einem Reluktanzantrieb nicht möglich. Um nun die Hubposition, -geschwindigkeit oder -beschleunigung bei der als Membranpumpe ausgebildeten erfindungsgemäßen Verdrängerpumpe einregeln zu können, ist erfindungsgemäß vorgesehen, dass der erfindungsgemäßen Membranpumpe eine Mess- und Steuereinheit mit Datenspeicher und Datenverarbeitungseinrichtung zugeordnet ist, die ein Positionssignal des mobilen Teils und die Stärke des Antriebsstroms als Mess- und/oder Regelgröße verarbeitet. Mit dem beschriebenen elektrodynamischen Antrieb und der Positionsregelung werden die Spulen mit gerade so viel beziehungsweise so wenig Strom betrieben, wie es für das Erreichen oder Halten einer bestimmten Hubposition erforderlich ist. Hierdurch und durch den linearen Zusammenhang von Antriebsstrom und Antriebskraft ist der gesamte Antrieb der erfindungsgemäßen Membranpumpe einfacher und dynamischer regelbar und zudem effizienter als bei den herkömmlichen Reluktanzantrieben.

An dem Antrieb der erfindungsgemäßen Verdrängerpumpe sind eine Mehrzahl von Spulen und Permanentmagneten vorgesehen und jeweils die Mehrzahl von Spulen und Permanentmagneten sind an dem mobilen Teil des Antriebs angeordnet. Dabei sind die Mehrzahl bestromter Spulen mit sich abwechselnden Wickelrichtungen von Magnetfeldern abwechselnder Richtung durchflossen, die von einer Mehrzahl von Permanentmagneten durch abwechselnde Polung erzeugbar oder erzeugt und über die Magnetpole in die Spulen leitbar oder geleitet sind, wobei jede bestromte Spule einen summierbaren Beitrag zu der hierdurch in Axialrichtung des Antriebs entstehenden Kraft leistet.

Dabei kann die Bewegung des mobilen Teils bei einer Ausgestaltung der erfindungsgemäßen Pumpe in vorteilhafter Weise durch ein Führungsglied auf lediglich einen Translationsfreiheitsgrad begrenzt werden, das als Gleitführung oder als Federelement ausgebildet ist. Dabei kann die Gleitführung sowohl als Gleitlager, wie auch als Schienen- oder Schwalbenschwanzführung ausgebildet sein. Auch als Federelemente sind unterschiedliche Anordnungen von Federn denkbar, beispielweise als Flachfeder.

Ein einfacher Aufbau der Pumpe bzw. ihres Antriebs wird hierbei durch eine Ausführungsform der Pumpe realisiert, bei der ein lineares Organ und eine Einfassung gegeneinander beweglich angeordnet sind, so dass eine bevorzugte Weiterbildung der Pumpe hierbei darin bestehen kann, dass das lineare Organ als Stange und/oder die Einfassung als im Querschnitt mantelförmiges Teil, in dessen Inneres die Stange greift, ausgebildet ist.

In einer anderen vorteilhaften Ausführung der Pumpe kann das lineare Organ mit den Permanentmagneten in sich abwechselnder Polung und das mantelförmige Teil mit der Mehrzahl von Spulen versehen sein, so dass die Spulen und Permanentmagnete in einer sich gegeneinander bewegenden Konstellation an dem Antrieb vorgesehen sind.

Dabei kann in zweckmäßigen Ausbildungen des Antriebs sowohl das lineare Organ das mobile Teil und die Einfassung das feste Teil bilden oder auch umgekehrt das lineare Organ das feste Teil und die Einfassung das mobile Teil bilden.

Aufgrund verringerter Vibrationen kann hierbei bevorzugt das mobile, ein Verdrängerelement der Pumpe antreibende Teil, bspw. die Einfassung, mit den Spulen versehen sein, so dass weniger Masse als im Falle bewegter Permanentmagnete zu bewegen ist.

Einen aus möglichst wenigen Teilen bestehenden, einfachen Aufbau der erfindungsgemäßen Pumpe erreicht man durch eine Ausführung, bei der das feste Teil mit einem Gehäuse des Antriebs fest verbunden oder einstückig mit diesem ausgebildet ist.

Um in geeigneter Weise dem mobilen Teil eine Bewegung entlang des lediglich einen Translationsfreiheitsgrades zu gestatten, können bei einer zweckmäßigen Weiterbildung das mobile Teil und das feste Teil durch das wenigstens eine Führungsglied miteinander verbindbar oder verbunden sein. Das wenigstens eine Führungsglied bildet dabei vorteilhaft eine lineare Führung ohne gleitende Flächen und ist daher reibungsfrei und langlebig.

Bei einer anderen zweckmäßigen Weiterbildung, die die Linearität der Führung erhöht, können eine Mehrzahl von Führungsgliedern, insbesondere zwei Führungsglieder vorgesehen sein, welche einander zugewandte Bereiche von mobilem und festem Teil miteinander verbinden. Die einander zugewandten Bereiche können dabei zum Beispiel Endbereiche der jeweiligen Teile sein. Im Falle einer Schub- oder Pleuelstange als mobilem Teil können also die beiden freien Enden des mobilen Teils (der Stange) mit dem festen Teil durch jeweils wenigstens ein Führungsglied verbunden sein.

Eine zweckmäßige Weiterbildung kann hierbei darin bestehen, eines der Führungsglieder in das Verdrängerelement zu integrieren oder das Verdrängerelement gleich durch ein Führungsglied zu bilden, wodurch eine kompakte, kostengünstige und verschleißfreie Führung des mobilen Teils gebildet ist. Die Membrane der Pumpe als Verdrängerelement ist dann gleichzeitig ein Führungsglied des Antriebs.

In einer anderen vorteilhaften, weil platzsparenden und eine erhöhte Sicherheit bietenden Ausführung der Pumpe kann wenigstens eines der Führungsglieder als Flachfeder ausgebildet sein, so dass bei Vorspannung der betreffenden Feder das bewegliche Teil gegebenenfalls auch ohne Antrieb in eine gewünschte Halteposition bewegbar ist. Die betreffende Flachfeder kann dabei als ein Metallformteil, das aus federndem Bandstahl gestanzt wird, ausgebildet sein.

In einer bevorzugten Ausführung kann demnach das wenigstens eine Führungsglied mit einer Vorspannung versehen sein, die das Verdrängerelement bei stromlosem Antrieb derart beaufschlagt, dass eine Eingangs- und/oder eine Ausgangsöffnung eines Arbeitsraumes der Pumpe verschlossen ist. Hierdurch kann der Fluidpfad im Stillstand der Pumpe mittels der Vorspannkraft der Feder zuverlässig verschlossen werden und es kann auch bei positivem Druckgefälle kein Fluid durch die passiven Ventile der Pumpe strömen.

Bei einer anderen, die gleiche Wirkung zeigenden Ausführung der Pumpe ist an dem Antrieb, etwa zwischen Gehäuse und mobilem Teil, eine Feder vorgesehen, die das mobile Teil beaufschlagt, wodurch das Verdrängerelement bei stromlosem Antrieb eine Eingangs- und/oder eine Ausgangsöffnung eines Arbeitsraumes der Pumpe verschließt. In dieser Ausführung ist die Feder aber kein Führungsglied des Antriebs im obigen Sinne, auch wenn die durch die Feder verursachte Bewegung gewissermaßen geführt sein kann.

Um eine schlanke Bauweise des Antriebs ermöglichen zu können, dessen seitliche Erstreckung sich vorteilhafter Weise in etwa an der Grundfläche des Pumpenkopfes orientiert, kann bei einer weiteren Ausführung der Pumpe die Mehrzahl von Spulen und Permanentmagneten jeweils in Reihe, insbesondere hintereinander, angeordnet sein. Dabei meint in Reihe bzw. hintereinander parallel bzw. koaxial zur Längserstreckung des Antriebs, so dass die Permanentmagnete etwa dort ausgeprägte Magnetpole bilden, wo gleichpolige Enden der Magnete innerhalb der betreffenden Reihe einander gegenüberliegen. Auf diese Weise kann die auf das mobile Teil aufbringbare Kraft durch Hintereinanderschaltung von Magneten bzw. Spulen an den gegeneinander beweglichen Teilen erhöht werden.

Eine vorteilhafte, verlustarme Kraftübertragung ermöglicht eine gute Ankopplung der Magnete an die bestromten Spulen, die gut gelingt, wenn die an dem mobilen oder an dem festen Teil angeordneten Spulen einen ringförmigen Querschnitt aufweisen, die Spulen also ringförmig gewickelt sind. Die an einem Umfang des betreffenden Teils gewickelten Spulen weisen abwechselnde Wicklungsrichtungen auf.

Eine weitere vorteilhafte Ausführung der erfindungsgemäßen Pumpe, bei der ein elektro-dynamischer Antrieb in geeigneter Weise mit der Pumpe verbindbar anzuordnen ist, kann dabei einen im Wesentlichen zylindrischen oder quadratischen Pumpenkörper aufweisen, dessen einer Endbereich mit einem Einlass und einem Auslass für das zu transportierende Fluid versehen ist und der sich an den Endbereich anschließend im Wesentlichen bündig in ein den Antrieb aufnehmendes Gehäuse fortsetzt.

Eine vorteilhafte Weiterbildung kann die Mess- und Steuereinheit derart programmierbar vorsehen, dass die Pumpe mit ihrem Antrieb hinsichtlich Ansaugung und Austrag des zu transportierenden Mediums sich gleichende oder sich unterscheidende Arbeitsschritte verarbeitet, also sogenannte Profile.

Bevorzugt können hierbei etwa Weg- und/oder Geschwindigkeitsprofile gefahren werden. Bei ersteren kann beispielsweise der vollständige Hub angesaugt, das dem Hubvolumen entsprechende Fluid aber anschließend in mehreren Teilvolumina dadurch ausgetragen werden, dass der Druckhub schrittweise in mehreren Schritten abgearbeitet wird. Bei letzteren ist etwa denkbar, dass beim Saughub die Geschwindigkeit so eingestellt wird, dass z.B. für viskose Medien ein langsames Ansaugen stattfindet oder anderweitig, je nach Anforderung der jeweiligen Anwendung, mittels einstellbarer Geschwindigkeit des Druckhubes die Austrittsgeschwindigkeit des Mediums eingestellt wird.

Eine bevorzugte Ausführungsform gemäß der Erfindung sieht vor, dass die erfindungsgemäße Pumpe als Membranpumpe und insbesondere als Membran-Flüssigkeitspumpe ausgebildet ist.

Ein Aspekt der Erfindung erstreckt sich dabei auch auf eine Lösung, bei der eine Anordnung einer Mehrzahl von Pumpen zu einem Pumpensystem eine Konfiguration bildet, bei der größere Volumina an zu transportierenden Medien bewegt werden sollen. Die Mehrzahl von Pumpen mit ihren Antrieben können parallel betrieben werden, die Mehrzahl von Ein- und Auslässen der entsprechenden Mehrzahl von Arbeitsräumen der Pumpen sind jeweils parallel untereinander verbunden.

Bei dem eingangs erwähnten Verfahren besteht die erfindungsgemäße Lösung darin, dass der wenigstens einen Verdrängerpumpe eine Mess- und Steuereinheit mit Datenspeicher und Datenverarbeitungseinrichtung zugeordnet ist, und dass zur Bestimmung des Drucks in einem der wenigstens einen Pumpe zugeordneten Arbeitsraum des Systems die zeitliche Entwicklung des elektrischen Stroms und der Position des Antriebs der wenigstens einen Verdrängerpumpe als Messgröße erfasst und ausgewertet wird und mit dem berechenbaren Übertragungsverhalten des Verdrängerelements der Druck ermittelt und gespeichert wird. Das die Aufgabe lösende Verfahren zeichnet sich dabei durch die Merkmale aus, dass zur Bestimmung des Drucks in einem der wenigstens einen Pumpe zugeordneten Arbeitsraum des Systems die zeitliche Entwicklung des elektrischen Stroms des Antriebs und die Position des mobilen Teils der wenigstens einen Pumpe als Messgröße erfasst werden und mit dem berechenbaren Übertragungsverhalten des Verdrängerelements der Druck im Arbeitsraum der Pumpe ermittelt wird. Es wird hierbei der Umstand genutzt, dass bei elektro-dynamischen Antrieben die erzeugte Kraft zu dem in den elektrischen Spulen erzeugten Strom in einem guten Maße proportional ist. Daher kann bei einer direkt konstanten Übertragung (bspw. bei einer Kolbenpumpe) oder bekannten oder aber wenigstens beschreibbaren Übertragung des Drucks vom Arbeitsraum der Pumpe auf den Antrieb anhand der Kraft bzw. des elektrischen Antriebsstromes und der Position des mobilen Teils der Druck im Arbeitsraum der Pumpe bestimmt werden. In diesem Sinne bildet das Verdrängerelement der Pumpe auch einen Drucksensor.

Das erfindungsgemäße Verfahren sieht die Erfassung des Stroms und der Position des Antriebs der wenigstens einen Verdrängerpumpe als Messgröße vor. Aus dem bekannten Übertragungsverhalten wird mittels der Größen 'Position' und 'Strom (Kraft)' der Druck im Arbeitsraum der zumindest einen Verdrängerpumpe ermittelt. Dabei kann das Übertragungsverhalten der Membrane mittels einer voll eingespannten Ringplatte angenähert werden, so dass bei Vernachlässigung der Scherkräfte sowie kleinerer Auslenkungen Gleichungen der ersten Ordnung verwendbar sind. In diesen Gleichungen kann die gemessene Kraft und die Position des starren Membranteils eingesetzt werden, um anschließend daraus auf den Druck im Arbeitsraum rückzuschließen.

Dabei sieht eine bevorzugte Weiterbildung gemäß der Erfindung vor, dass das Übertragungsverhalten der Membrane durch die Formel p = c₁F+c₂x beschrieben wird, wobei p der Druck im Arbeitsraum, F die Pleuelkraft, x die Position des Antriebs und c₁ sowie c₂ von der Geometrie und den Materialeigenschaften der Membrane abhängige Konstanten sind. Diese Konstanten lassen sich aus dem äußeren Einspannradius a sowie dem inneren Einspannradius b der Membrane, der Membrandicke h, dem E-Modul des für die Arbeitsmembrane verwendeten Materials und aus der Poissonzahl nu ermitteln.

Das Übertragungsverhalten der Membrane kann mittels numerischer Berechnungsverfahren, zum Beispiel mittels 'Finite Elemente'- oder, Finite-Differenzen'-Methoden, für eine Anzahl von Positionen und Belastungsfälle ermittelt und als Sollwerte in einer Tabelle hinterlegt werden. Dabei lässt sich das Übertragungsverhalten der Membrane durch die Formel p = f (F,x) numerisch beschreiben. Mit den in der Tabelle hinterlegten Werten beziehungsweise mit dazwischenliegenden Interpolationen lässt sich anschließend jeweils das 'richtige' Übertragungsverhalten der Arbeitsmembrane zur Berechnung des Drucks ermitteln.

Die Druckbestimmung kann in einer vorteilhaften Variante des Verfahrens in beide Übertragungsrichtungen der wenigstens einen Pumpe einzeln stattfinden, d.h. eine Bestimmung des Unterdrucks bei der Ansaugbewegung der Pumpe und des Überdrucks bei der Ausstossbewegung. In einer Weiterbildung kann der Druck einer Mehrzahl von einem Pumpensystem zugeordneten Pumpen bestimmt werden und dabei vorteilhaft für jede der Pumpen einzeln regelbar sein, wobei dies durch eine gemeinsame Regeleinrichtung, etwa in Form der Mess- und Steuereinheit realisiert sein kann.

Da jede der in einem Pumpensystem eingesetzten Pumpen bereits aufgrund von Bauteiltoleranzen ein unterschiedliches Übertragungsverhalten an den Tag legen kann, ist es im Sinne einer möglichst fehlerfreien Druckbestimmung von Vorteil, wenn bei einer Variante des Verfahrens das Übertragungsverhalten des Drucks auf den Antrieb für jede Pumpe vor ihrem Einsatz in dem Pumpensystem bestimmt und in einem der Mess- und Steuereinheit zugeordneten Datenspeicher gespeichert und abrufbar vorgehalten wird.

In einer Variante bildet dabei das Pumpensystem mit der Mess- und Steuereinheit einen Regelkreis mit der Antriebsstromstärke als Messgröße und dem Druck des Arbeitsraums als Regelgröße betrieben wird.

In vorteilhaften Varianten kann das Pumpensystem mit der Regelung über die Mess- und Steuereinheit von den gespeicherten Übertragungsprofilen abweichende Entwicklungen des Drucks durch Manipulation des Antriebs kompensieren. So kann etwa am Ein- und/oder Austritt der oder einer Pumpe eine Druckregelung stattfinden, die den Druck durch den Antrieb in einem Wertefenster zwischen zwei manipulierbaren Extremwerten, einem Minimal- und einem Maximalwert, hält oder die Pumpe oder Pumpen mit einer Druckabschaltung bei Überschreitung von Extremwerten versehen sein. Zweckmäßiger Weise kann etwa der Antrieb durch die Mess- und Steuereinheit bei Überschreiten der Extremwerte für ein wählbares Zeitintervall abgeschaltet werden.

In weiteren vorteilhaften Varianten können mittels des erfindungsgemäßen Verfahrens Kavitation oder Ausgasung infolge Unterdrucks des Fluids in der Pumpe erkannt und/oder vermieden werden oder zwecks konstantem Hubvolumen der Hub bei veränderlichem Gegendruck kompensiert werden.

Um mittels eines solchen Pumpensystems Fuiddaten wie etwa dessen Viskosität und/oder Eigenschaften eines angeschlossenen Leitungssystems, etwa dessen Strömungswiderstand, dessen elastisches Verhalten oder Dämpfungsverhalten zu ermitteln kann eine weitere Variante des erfindungsgemäßen Verfahrens vorsehen, durch die Mess- und Steuereinheit den zeitlichen Verlauf des Drucks für unterschiedliche Geschwindigkeiten bei Ein- und Auslass des zu transportierenden Mediums aus dem Arbeitsraum zu erfassen und mittels einer Auswerteeinheit aus diesem zeitlichen Verlauf Parameter des Mediums und/oder wenigstens einer Transporteinrichtung zu ermitteln.

Eine andere Variante des Pumpensystems manipuliert dabei anhand der ermittelten Parameter Kenngrößen des Antriebs der Pumpe durch diese im Sinne eines Selbstlerneffekts selbständig, was bedeutet, dass anhand der ermittelten Eigenschaften des Fluids und/oder der Fluidleitungen (also deren Strömungswiderstand, elastisches Verhalten und/oder Dämpfungsverhalten) adaptive Weg- oder Geschwindigkeitsprofile an der oder den Pumpen gefahren werden.

Insgesamt ist damit ein Pumpensystem realisierbar in dem Druck, Volumen oder weitere Parameter seitens eines Benutzers über die Mess- und Steuereinheit ansteuerbar ausgelegt werden können

Die erfindungsgemäße Pumpe mit zugeordnetem Antrieb wird nachstehend anhand von Ausführungsbeispielen in der Zeichnung näher erläutert. In teilweise schematisierter Darstellung zeigen dabei die
- Fig.1: eine geschnittene Seitenansicht eines ersten Ausführungsbeispiels einer erfindungsgemäßen Pumpe mit festem und mobilem Teil an seinem Antrieb, wobei die Spulen an dem festen Teil angeordnet sind;
- Fig.2: eine geschnittene Seitenansicht eines weiteren Ausführungsbeispiels einer erfindungsgemäßen Pumpe mit festem und mobilem Teil an seinem Antrieb, wobei die Spulen an dem mobilen Teil angeordnet sind;
- Fig.3: eine ebene Draufsicht auf ein zwischen dem mobilen und festen Teil angeordnetes Führungsglied aus den Fig.1 und 2.

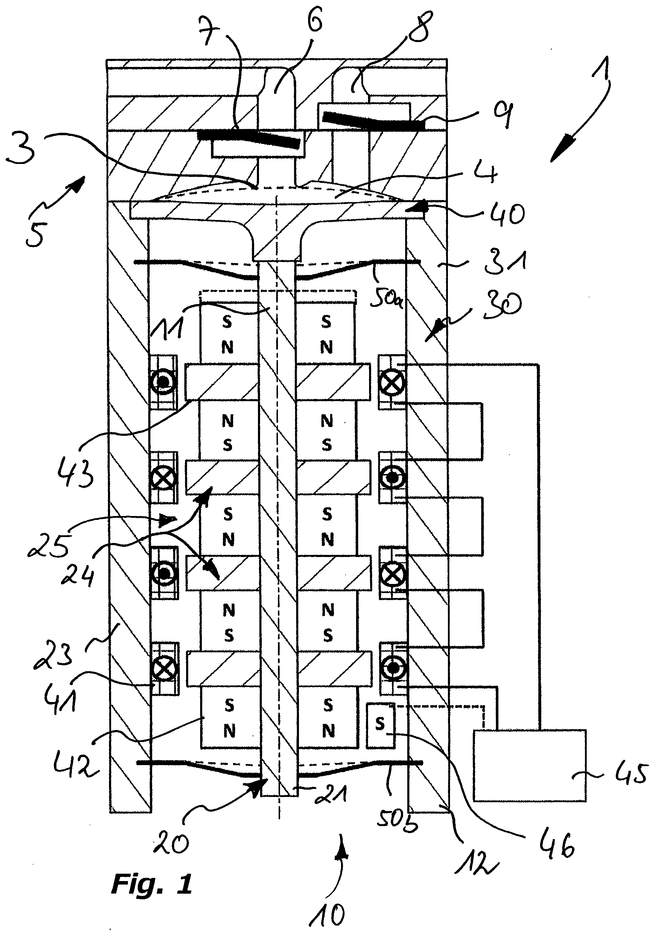

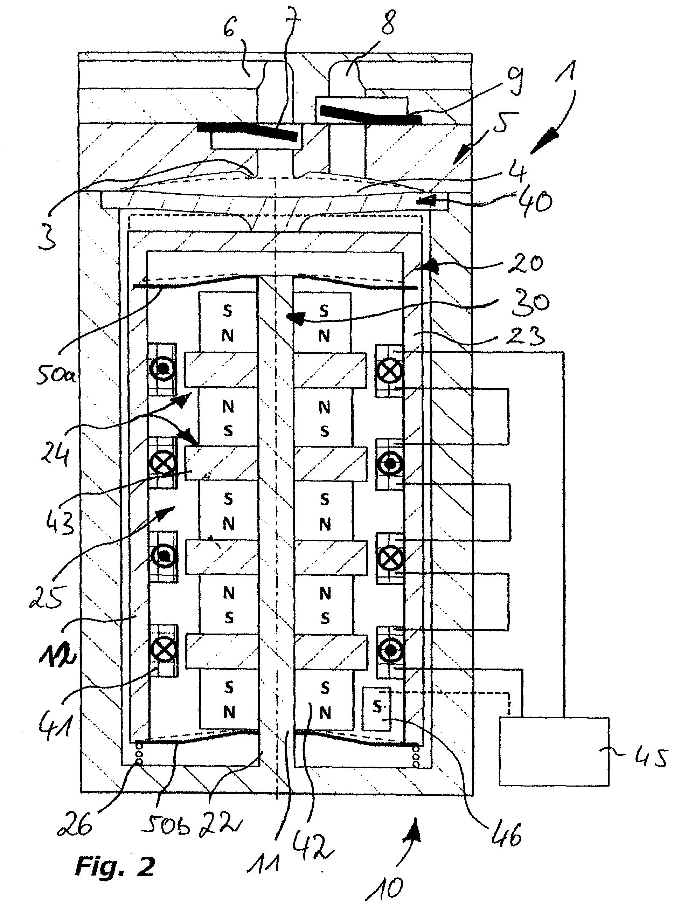

In den Fig.1 und 2 erkennt man jeweils eine im Ganzen mit 1 bezeichnete Pumpe. Diese als Verdrängerpumpe ausgebildete Pumpe 1 weist einen Pumpenkopf 5 auf, an dem man einen Einlass 6 und einen Auslass 8 mit den zugeordneten Ventilen 7 und 9 erkennt. Die Pumpe 1 ist mit einem mobilen Teil 20 versehen, das relativ zu einem festen, durch ein Gehäuse 31 gebildeten Teil 30 bewegbar angeordnet ist. Das mobile Teil 20 der Fig.1 ist dabei eine Pleuelstange 21, die durch den Antrieb 10 angetrieben wird. Das angetriebene mobile Teil 20 treibt dabei selbst ein Verdrängerelement 40 der Pumpe 1 an, wobei der Antrieb 10 durch einen elektrodynamischen Antrieb gebildet ist. An dem Antrieb 10 ist eine Mehrzahl von Spulen 41 und Permanentmagneten 42 vorgesehen, wobei jeweils die Mehrzahl von Spulen 41 (Fig.2) oder die Mehrzahl von Permanentmagneten 42 (Fig.1) an dem mobilen Teil 20 des Antriebs 10 angeordnet sind. Außerdem sind an den Antrieben 10 der Fig.1 und 2 je zwei Führungsglieder 50a, 50b vorgesehen, die dem jeweiligen mobilen Teil 20 eine Bewegung entlang lediglich eines Translationsfreiheitsgrades gestatten, der sich in den Darstellungen der Fig.1 und 2 entlang einer vertikalen, in der Ebene des Betrachters liegenden Achse erstreckt.

Man erkennt weiter, dass der Antrieb 10 ein lineares Organ 11 und eine Einfassung 12 aufweist, die gegeneinander beweglich angeordnet sind, wobei das lineare Organ 11 als Pleuelstange 21 (Fig.1) oder als Stange 22 (Fig.2) und die Einfassung 12 als mantelförmiges Teil 23, in dessen Inneres die Pleuelstange 21 / Stange 22 ragt, ausgebildet sind. Außerdem ist den Fig.1 und 2 zu entnehmen, dass das lineare Organ 11 mit den Permanentmagneten 42 in sich abwechselnder Polung und das mantelförmige Teil 23 mit der Mehrzahl von Spulen 41 versehen ist. Dabei sind die Permanentmagnete 42 in eine Reihe derart über den überwiegenden Teil der Länge des linearen Organs 11 angeordnet, dass ausgeprägte Pole 43 durch einander benachbart gegenüberliegenden Magnetenden gleicher Polung entstehen. Die betreffenden Pole 43 werden von ringförmig gewickelten Spulen 41 mit abwechselnder Wicklungsrichtung, die an der Einfassung 12 angeordnet sind, eingefasst.

Der magnetische Rückschluss erfolgt entweder über das mantelförmige Teil 23 oder das Gehäuse 31, welche in diesem Fall vorzugsweise aus einem ferromagnetischen Material hergestellt sind.

Der fundamentale Unterschied zwischen den Fig.1 und 2 besteht darin, dass zum einen in der Fig.1 das lineare Organ durch die Pleuelstange gebildet ist, die das mobile Teil ist und von dem mantelförmigen Teil 23 als festem Teil eingefasst ist, das also die Einfassung 12 bildet, während zum anderen in der Fig.2 das lineare Teil durch die Stange 22 das feste Teil 30 bildet und die Einfassung 12 mit dem mantelförmigen Teil 23 das mobile Teil 20 bildet. Es verhält sich demnach so, dass das lineare Organ 11 das mobile Teil 20 und die Einfassung 12 das feste Teil 30 bildet oder umgekehrt. Dabei ist das feste Teil 30 mit einem Gehäuse 31 des Antriebs 10 fest verbunden oder einstückig mit diesem ausgebildet, im Fall der Fig.1 ist das feste Teil 30 ein Teil des Gehäuses 31, in der Fig. 2 ist es als Stange 22 fest mit dem Gehäuse verbunden. In beiden Fällen ragt das lineare Organ 11 in das Innere des mantelförmigen Teils 23, also in den von der Einfassung 12 gebildeten lichten Querschnitt 25.

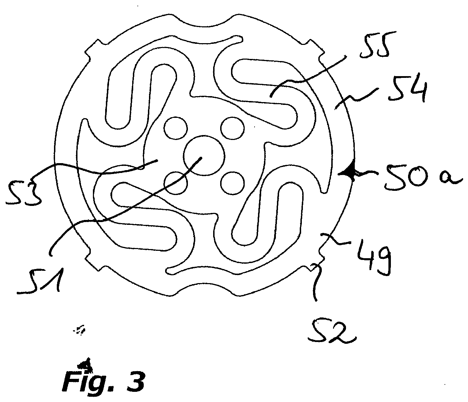

In seinen Endbereichen ist das lineare Organ 11 entweder als mobiles Teil 20 (Fig.1) oder als festes Teil 30 (Fig.2) jeweils über ein Führungsglied 50a, 50b mit dem jeweils anderen Teil 30, 20 verbunden, das Führungsglied 50a ist als Flachfeder 49 in der Fig. 3 im Detail gezeigt. Das durch den Antrieb 10 über die Spulen 41 und die Permanentmagneten 42 angetriebene Verdrängerelement 40 ist jeweils mit dem mobilen Teil 20 (lineares Organ 11 in der Fig.1 und Einfassung 12 in der Fig.2) verbunden, seine Bewegung führt die Hübe der Pumpe 1 aus, gleichzeitig begrenzt es mit den Innenwänden des Pumpenkopfs 5 den Arbeitsraum 4 der Pumpe 1. Zwischen dem mobilen Teil 20 und dem festen Teil 30 kann eine Feder 26 angeordnet sein, die als Druckfeder das betreffende mobile Teil 20 in Richtung des Pumpenkopfs 5 beaufschlagt, so dass im stromlosen Zustand der Spulen 41 der Arbeitsraum 4 der Pumpe durch das Verdrängerelement 40 verschließbar ist.

Sowohl in den Fig.1 und Fig.2 sind jedenfalls das mobile Teil 20 und das feste Teil 30 durch das wenigstens eine Führungsglied 50a, 50b miteinander verbindbar oder verbunden.

In den Fig.1 und 2 sind jeweils gestrichelte Konturen zu erkennen, die den Verlauf einer entsprechenden Kontur von linearem Organ 11, Einfassung 12, Verdrängerelement 40, einem äußeren Permanentmagneten 42 und Führungsgliedern 50a, 50b zeigen, deren konkrete Kontur in der entsprechenden Figur jeweils am Ende des Saughubs dargestellt ist, in der anderen Extremstellung des Druckhubs zeigen. Anhand der gestrichelten Kontur in der anderen Extremstellung erkennt man auch, dass aufgrund des vorspringenden Randes 3 der Öffnung der Zuführung 6 das Verdrängerelement 40 in der Lage ist, Einlass 6 und/oder Auslass 8 des Arbeitsraums 4 im stromlosen Zustand der Spulen 41 zu verschließen.

Die als Flachfedern 49 ausgebildeten Führungsglieder 50a, 50b sind dabei in den Fig.1 und 2 jeweils umgekehrt ausgelenkt dargestellt, so dass die Führungsglieder 50a, 50b durch ihre Vorspannung das mobile Teil 20 und darüber das Verdrängerelement jeweils wieder in die Extremstellung des Druckhubes bringen können. Anstelle der Führungsglieder 50a, 50b oder zu deren Unterstützung kann diese Rückstellung von der Feder 26 übernommen werden.

Sowohl in der Fig.1 wie in der Fig.2 erkennt man, dass mit den in Reihe miteinander verbundenen, zu bestromenden Spulen 41 an Anfang und Ende oder jeweils einzeln die Mess- und Steuereinheit 45 elektrisch verbunden ist, die gleichzeitig eine Verbindung mit dem als Hallsensor ausgebildeten Sensor 46 aufweist. Durch die abwechselnde Wickelrichtung der Spulen 41 ergeben sich bei serieller Bestromung abwechselnde Stromrichtungen innerhalb der Spulen 41. Durch die zusätzliche magnetische Durchflutung, die von den Permanentmagneten 42 erzeugt und über Magnetpole 24 in die Spulen 41 eingeleitet wird, entsteht zwischen den Magnetpolen 24 und den Spulen 41 je eine Relativkraft (Lorentzkraft) in Axialrichtung des Antriebs 10, die entstehenden Kräfte summieren sich bei mehreren Spulen 41 auf.

In der Fig.3 erkennt man ein Führungsglied 50a, das mit einem in etwa kreisrunden Querschnitt versehen ist, dessen mittlere Ausnehmung 51 zur Aufnahme des jeweiligen linearen Organs 11 vorgesehen ist, an welchem das bzw. die Führungsglieder 50a, 50b axial in ihrem Innenbereich 53 festgelegt sind, während deren Randbereich 54 zumindest an gleichmäßig beabstandeten Vorsprüngen 52 mit der jeweiligen Einfassung 12 verbunden ist. Randbereich 54 und Innenbereich 53 sind durch mehrere geschwungene Federelemente 55 miteinander verbunden, die die Vorspannkraft der Flachfeder 49 als Federelement 50a, 50b verursachen. Der Kraftvektor dieser Vorspannkraft (nicht dargestellt) weist koaxial zu dem ebenfalls nicht gezeigten linearen Organ 11 in die Zeichenebene oder aus dieser heraus, so dass der Randbereich 54 und der Innenbereich 53 der Flachfeder ein sich unterscheidendes Höhenniveau haben.

Demnach betrifft die vorstehend beschriebene Erfindung also eine Pumpe 1, insbesondere oszillierende Verdrängerpumpe, bevorzugt eine Membranpumpe, mit wenigstens einem mobilen Teil 20, das relativ zu einem festen Teil 30 bewegbar angeordnet ist, wobei das mobile Teil 20 angetrieben ist und selbst ein Verdrängerelement 40 der Pumpe 1 antreibt, wobei der Antrieb 10 durch einen elektrodynamischen Antrieb gebildet ist. Um eine Pumpe 1 mit einem elektrodynamischen Antrieb zu erstellen, die ein sehr direktes Ansprechverhalten hat, die mittels elektrischer Ansteuerung in beide Richtungen einen Hub für das Verdrängerelement 40 der Pumpe 1 ausführen kann und die energieeffizient ist, ist an dem Antrieb 10 eine Mehrzahl von Spulen 41 und Permanentmagneten 42 vorgesehen und sind jeweils die Mehrzahl von Spulen 41 oder die Mehrzahl von Permanentmagneten 42 an dem mobilen Teil 20 des Antriebs 1 angeordnet, und an dem Antrieb 10 ist wenigstens ein Führungsglied 50a, 50b vorgesehen, welches dem mobilen Teil 20 eine Bewegung entlang lediglich eines Translationsfreiheitsgrades gestattet.

Die hier als Membranpumpe ausgebildete oszillierende Verdrängerpumpe 1 weist eine Mess- und Steuereinheit 45 mit Datenspeicher und Datenverarbeitungseinrichtung auf, die ein Positionssignal des mobilen Teils als Messgröße und die Stärke des Antriebsstroms als Mess- und/oder Regelgröße verarbeitet. Aus dem berechenbaren und anschließend bekannten Übertragungsverhalten der Membrane wird mittels der Größen 'Position' und 'Strom (Kraft)' der Druck im Arbeitsraum der Verdrängerpumpe 1 ermittelt. Zur Bestimmung des Drucks im Arbeitsraum 4 der Pumpe 1 wird die zeitliche Entwicklung des elektrischen Stroms und die Position des Antriebs 10 als Messgröße erfasst und ausgewertet, um anschließend aufgrund des berechenbaren Übertragungsverhaltens den Druck im Arbeitsraum 4 zu ermitteln und zu speichern. Dabei kann das Übertragungsverhalten der als Verdrängerelement 40 dienenden Membrane durch die Formel p = c₁F+c₂x beschrieben werden, wobei in dieser Formel p der Druck im Arbeitsraum der wenigstens einen Verdrängerpumpe 1, F die Pleuelkraft und x der Hub beziehungsweise die Position der Arbeitsmembrane sind und die Konstanten c₁ und c₂ von der Geometrie sowie den Materialeigenschaften der Arbeitsmembrane abhängig sind. Diese Konstanten c₁ und c₂ lassen sich wiederum durch den äußeren Einspannradius a sowie den inneren Einspannradius b der Membrane, durch die Membrandicke und das E-Modul E sowie die Poissonzahl nu ermitteln. Das Übertragungsverhalten der Membrane kann mit Hilfe eines numerischen Berechnungsverfahrens, beispielsweise mittels einer 'Finite-Differenzen'- oder einer 'Finite-Elemente'-Methode nachgerechnet werden für eine Azahl von Positionen und Belastungsfälle, wobei die Werte in einer Tabelle als Sollwerte hinterlegt werden. Mit diesen Werten beziehungsweise mit dazwischen liegenden Interpolationen wird dann das jeweils 'richtige' Übertragungsverhalten zur Berechnung des Drucks im Arbeitsraum ermittelt. Die Mess- und Steuereinheit 45, in der für eine Anzahl von Positionen und Belastungsfälle die Druckwerte in einer Tabelle hinterlegt sind, vergleicht die Ist- und Sollwerte, um anschließend auf das Übertragungsverhalten zwischen dem Druck und der Pleuelkraft rückzuschließen.

### Bezugszeichen

- 1: Pumpe
- 3: vorspringender Rand des Einlasses
- 4: Arbeitsraum
- 5: Pumpenkopf
- 6: Einlass
- 7: Einlassventil
- 8: Auslass
- 9: Auslassventil
- 10: Antrieb
- 11: lineares Organ
- 12: Einfassung
- 20: mobiler Teil
- 21: Pleuelstange
- 22: Stange
- 23: mantelförmiges Teil
- 24: ausgeprägter Magnetpol
- 25: lichter Querschnitt
- 26: Feder
- 30: fester Teil
- 31: Gehäuse
- 40: Verdrängerelement (Membrane)
- 41: Spule
- 42: Permanentmagnet
- 45: Mess- / Steuereinheit
- 46: Positionssensor (Hall-Sensor)
- 49: Flachfeder
- 50a,b: Führungsglied
- 51: mittlere Ausnehmung
- 52: Vorsprung
- 53: Innenbereich
- 54: Randbereich
- 55: Federelement

## Patentansprüche

1. Oszillierende Verdrängerpumpe (1) mit wenigstens einem mobilen Teil (20), das relativ zu einem festen Teil (30) bewegbar angeordnet und mittels einem Antrieb (10) angetrieben ist und das selbst ein Verdrängerelement (40) der Verdrängerpumpe (1) antreibt, wobei der Antrieb (10) eine Mehrzahl bestromter Spulen (41) und Permanentmagneten (42) hat und jeweils die Mehrzahl von Spulen (41) oder die Mehrzahl von Permanentmagneten (42) an dem mobilen Teil (20) des Antriebs (10) angeordnet sind, wobei die Mehrzahl bestromter Spulen (41) mit sich abwechselnden Wickelrichtungen von Magnetfeldern abwechselnder Richtung durchflossen sind, die von einer Mehrzahl von Permanentmagneten (42) durch abwechselnde Polung erzeugbar oder erzeugt und über die Magnetpole (24) in die Spulen (41) leitbar oder geleitet sind, wobei jede bestromte Spule (41) einen summierbaren Beitrag zu der hierdurch in Axialrichtung des Antriebs (10) entstehenden Kraft leistet, wobei an dem Antrieb (10) wenigstens ein Führungsglied (50a, 50b) vorgesehen ist, welches dem mobilen Teil (20) eine Bewegung entlang lediglich eines Translationsfreiheitsgrades gestattet, und wobei der Verdrängerpumpe eine Mess- und Steuereinheit (45) mit Datenspeicher und Datenverarbeitungseinrichtung zugeordnet ist, die ein Positionssignal des mobilen Teils (20) und die Stärke des Antriebsstromes als Mess- und/oder Regelgröße verarbeitet, **dadurch gekennzeichnet, dass** die Verdrängerpumpe (1) als Membranpumpe und ihr Verdrängerelement (40) als Membrane ausgebildet sind, und dass der Antrieb (10) als spulenseitig polstückfreier elektrodynamischer Antrieb ausgebildet ist.

2. Pumpe nach Anspruch 1, **dadurch gekennzeichnet, dass** die Pumpe (1) als Membran-Flüssigkeitspumpe ausgebildet ist.

3. Pumpe nach Anspruch 1 oder 2, **dadurch gekennzeichnet, dass** das wenigstens eine Führungsglied (50a, 50b) als Gleitführung oder als Federelement (55) ausgebildet ist.

4. Pumpe nach einem der Ansprüche 1 bis 3, **dadurch gekennzeichnet, dass** das lineare Organ (11) als Stange (21, 22) und/oder die Einfassung (12) als mantelförmiges Teil (23), in dessen Inneres (25) die Stange (21, 22) ragt, ausgebildet sind.

5. Pumpe nach einem der Ansprüche 1 bis 4, **dadurch gekennzeichnet, dass** das lineare Organ (11) mit den Permanentmagneten (42) in sich abwechselnder Polung und das mantelförmige Teil (23) mit der Mehrzahl von Spulen (41) versehen ist.

6. Pumpe nach einem der vorhergehenden Ansprüche, **dadurch gekennzeichnet, dass** das lineare Organ (11) das mobile Teil (20) und die Einfassung (12) das feste Teil (30) bildet oder umgekehrt.

7. Pumpe nach einem der vorhergehenden Ansprüche, **dadurch gekennzeichnet, dass** das feste Teil (30) mit einem Gehäuse (31) des Antriebs (10) fest verbunden oder einstückig mit diesem ausgebildet ist.

8. Pumpe nach einem der vorhergehenden Ansprüche, **dadurch gekennzeichnet, dass** das mobile Teil (20) und das feste Teil (30) durch das wenigstens eine Führungsglied (50a, 50b) miteinander verbindbar oder verbunden sind.

9. Pumpe nach einem der vorhergehenden Ansprüche, **dadurch gekennzeichnet, dass** eine Mehrzahl von Führungsgliedern (50a, 50b), insbesondere zwei Führungsglieder (50a, 50b) vorgesehen sind, welche einander zugewandte Bereiche von mobilem und festem Teil (20, 30) miteinander verbinden.

10. Pumpe nach einem der vorhergehenden Ansprüche, **dadurch gekennzeichnet, dass** eines der Führungsglieder (50a, 50b) in das Verdrängerelement (40) integriert ist oder das Verdrängerelement (40) bildet.

11. Pumpe nach einem der vorhergehenden Ansprüche, **dadurch gekennzeichnet, dass** das wenigstens eine Führungsglied (50a, 50b) mit einer Vorspannung versehen ist, die das Verdrängerelement (40) bei stromlosem Antrieb (10) derart beaufschlagt, dass eine Eingangs- und/oder eine Ausgangsöffnung eines Arbeitsraumes (4) der Pumpe (1) verschlossen ist.

12. Pumpe nach einem der vorhergehenden Ansprüche, **dadurch gekennzeichnet, dass** an dem Antrieb (10) das mobile Teil (20) von einer Feder (26) beaufschlagt ist, wodurch das Verdrängerelement (40) bei stromlosem Antrieb eine Eingangs- und/oder eine Ausgangsöffnung eines Arbeitsraumes (4) der Pumpe (1) verschließt.

13. Pumpe nach einem der vorhergehenden Ansprüche, **dadurch gekennzeichnet, dass** die Mehrzahl von Spulen (41) und Permanentmagneten (42) jeweils in Reihe angeordnet sind.

14. Pumpe nach einem der vorhergehenden Ansprüche, **dadurch gekennzeichnet, dass** die Pumpe (1) einen im Wesentlichen zylindrischen oder quadratischen Pumpenkopf (5) aufweist, dessen einer Endbereich mit einem Einlass (6) und einem Auslass (8) für das zu transportierende Fluid versehen ist und der sich an den Endbereich anschließend im Wesentlichen bündig in ein den Antrieb (10) aufnehmendes Gehäuse (31) fortsetzt.

15. Pumpe nach einem der vorhergehenden Ansprüche, **dadurch gekennzeichnet, dass** die Pumpe (1) im Bereich des Antriebs (10) mit einem Positionssensor (46) versehen ist.

16. Pumpe nach Anspruch 15, **dadurch gekennzeichnet, dass** der Positionssensor (46) durch einen Hall-Sensor gebildet ist.

17. Pumpe nach einem der Ansprüche 1 bis 16, **dadurch gekennzeichnet, dass** die Mess- und Steuereinheit (45) derart programmierbar vorgesehen ist, dass die Pumpe (1) mit ihrem Antrieb (10) hinsichtlich Ansaugung und Austrag des zu transportierenden Mediums sich gleichende oder sich unterscheidende Arbeitsschritte verarbeitet.

18. Anordnung einer Mehrzahl von Pumpen (1), nach einem der vorhergehenden Ansprüche, zu einem Pumpensystem mit einer der Anzahl der Pumpen (1) entsprechenden Zahl von Arbeitsräumen (4), deren Ein- und Auslässe jeweils parallel untereinander verbunden sind.

19. Verfahren zum Betrieb eines Pumpensystems, mit wenigstens einer Verdrängerpumpe (1) nach einem der Ansprüche 1 bis 17, insbesondere in einer Anordnung gemäß Anspruch 18, wobei der wenigstens einen Verdrängerpumpe (1) eine Mess- und Steuereinheit (45) mit Datenspeicher und Datenverarbeitungseinrichtung zugeordnet ist, **dadurch gekennzeichnet, dass** zur Bestimmung des Drucks in einem der wenigstens einen Pumpe (1) zugeordneten Arbeitsraum (4) des Systems die zeitliche Entwicklung des elektrischen Stroms und der Position des Antriebs (10) der wenigstens einen Pumpe (1) als Messgröße erfasst und ausgewertet wird und mit dem berechenbaren Übertragungsverhalten des Verdrängerelements (40) der Druck im Arbeitsraum (4) ermittelt und gespeichert wird.

20. Verfahren nach Anspruch 19, **dadurch gekennzeichnet, dass** das Übertragungsverhalten einer als Verdrängerelement (40) dienenden Membrane durch die Formel p = c₁F+c₂x beschrieben wird, wobei p der Druck im Arbeitsraum, F die Pleuelkraft, x die Position des Antriebs ist und die Konstanten c₁ und c₂ von der Geometrie und den Materialeigenschaften der Membrane abhängig sind.

21. Verfahren nach Anspruch 19 oder 20, **dadurch gekennzeichnet, dass** das Übertragungsverhalten des Verdrängerlements (40) durch die Formel p = f (F,x) und somit der Druck im Arbeitsraum (4) als Funktion aus Pleuelkraft und Position des Antriebs (10) numerisch und insbesondere mit "Finite-Differenzen"- oder "Finite-Methoden" beschrieben wird.

22. Verfahren nach einem der Ansprüche 19 bis 21, **dadurch gekennzeichnet, dass** das Pumpensystem mit der Mess- und Steuereinheit (45) einen Regelkreis bildet, der mit der Antriebsstromstärke und der Position des mobilen Teils als Messgröße und dem Druck des Arbeitsraums (4) als Regelgröße betrieben wird.

23. Verfahren nach einem der Ansprüche 19 bis 22, **dadurch gekennzeichnet, dass** der Druck in beide Übertragungsrichtungen der Pumpe (1), also bei der Ansaugung und dem Austrag des zu transportierenden Mediums, einzeln bestimmt wird.

24. Verfahren nach einem der Ansprüche 19 bis 23, **dadurch gekennzeichnet, dass** der Druck einer Mehrzahl von einem Pumpensystem zugeordneten Pumpen (1) bestimmt wird, wobei jede der Pumpen (1) separat regelbar ist.

25. Verfahren nach einem der Ansprüche 19 bis 24, **dadurch gekennzeichnet, dass** die Mess- und Steuereinheit (45) von den gespeicherten Übertragungsprofilen abweichende Entwicklungen des Drucks durch Manipulation des Antriebs (10) kompensiert.

26. Verfahren nach einem der Ansprüche 19 bis 25, **dadurch gekennzeichnet, dass** das Übertragungsverhalten der Membrane mittels einer 'Finite Elemente'-Simulation für eine Anzahl von Positionen und Belastungsfälle als Sollwert-Tabelle hinterlegt wird und dass aus den hinterlegten Sollwerten beziehungsweise dazwischenliegenden Interpolationen das Übertragungsverhalten zur Berechnung des Drucks ermittelt wird.

27. Verfahren nach einem der Ansprüche 19 bis 26, **dadurch gekennzeichnet, dass** durch die Mess- und Steuereinheit (45) der zeitliche Verlauf des Drucks für unterschiedliche Geschwindigkeiten bei Ein- und Auslass (6, 8) des zu transportierenden Mediums aus dem Arbeitsraum (4) ermittelt wird und mittels einer Auswerteeinheit aus diesem zeitlichen Verlauf Parameter des Mediums und/oder wenigstens einer Transporteinrichtung ermittelt werden.

## Claims

1. Oscillating positive displacement pump (1) with at least one mobile part (20), which is arranged to be moveable relative to a fixed part (30) and is driven by means of a drive (10) and drives a displacement element (40) of the positive displacement pump (1) itself, wherein the drive (10) has a plurality of energized coils (41) and permanent magnets (42) and the plurality of coils (41) or the plurality of permanent magnets (42) are arranged on the mobile part (20) of the drive (10) respectively, wherein magnetic fields with an alternating direction flow through the plurality of energized coils (41) with alternating winding directions, said magnetic fields being generated or capable of being generated by a plurality of permanent magnets (42) due to an alternating polarization and being conducted or capable of being conducted into the coils (41) via the magnetic poles (24), wherein each energized coil (41) contributes a summable contribution to the force arising by means of this in the axial direction of the drive (10), wherein at least one guide member (50a, 50b) is provided on the drive (10), which permits the mobile part (20) to move along only one degree of translational motion of freedom and wherein a measurement and control unit (45) with a data storage and data processing device is associated with the positive displacement pump, which processes a position signal of the mobile part (20) and the strength of the drive current as a measured and/or control variable, **characterized in that** the positive displacement pump (1) is designed as a diaphragm pump and its displacement element (40) is designed as diaphragm and **in that** the drive (10) is designed as an electrodynamic drive free of pole pieces around the coils.

2. Pump according to Claim 1, **characterized in that** the pump (1) is designed as a liquid diaphragm pump.

3. Pump according to Claim 1 or 2, **characterized in that** the at least one guide member (50a, 50b) is designed as a sliding guide or as a spring element (55) .

4. Pump according to one of Claims 1 to 3, **characterized in that** the linear body (11) is designed as a rod (21, 22) and/or the mounting (12) is designed as a shell-shaped part (23), into the interior space (25) of which the rod (21, 22) protrudes.

5. Pump according to one of Claims 1 to 4, **characterized in that** the linear body (11) is provided with the permanent magnets (42) with an alternating polarity and the shell-shaped part (23) is provided with the plurality of coils (41).

6. Pump according to any one of the preceding claims, **characterized in that** the linear body (11) forms the mobile part (20) and the mounting (12) forms the fixed part (30) or vice versa.

7. Pump according to any one of the preceding claims, **characterized in that** the fixed part (30) is permanently connected to a housing (31) of the drive (10) or is designed as a single piece with this.

8. Pump according to any one of the preceding claims, **characterized in that** the mobile part (20) and the fixed part (30) can be connected or are connected to each other by means of the at least one guide member (50a, 50b).

9. Pump according to any one of the preceding claims, **characterized in that** a plurality of guide members (50a, 50b), in particular, two guide members (50a, 50b) are provided, which connect regions of the mobile and fixed part (20, 30) facing each other to each other.

10. Pump according to any one of the preceding claims, **characterized in that** one of the guide members (50a, 50b) is integrated into the displacement element (40) or forms the displacement element (40) .

11. Pump according to any one of the preceding claims, **characterized in that** the at least one guide member (50a, 50b) is provided with a preload, which is applied to the displacement element (40) with a deenergized drive (10) in such a way that an inlet and/or an outlet opening of a working space (4) of the pump (1) is sealed.

12. Pump according to any one of the preceding claims, **characterized in that** the mobile part (20) is impinged by a spring (26) on the drive (10), whereby the displacement element (40) with a deenergized drive seals an inlet and/or an outlet opening of a working space (4) of the pump (1).

13. Pump according to any one of the preceding claims, **characterized in that** the plurality of coils (41) and permanent magnets (42) are arranged in a row respectively.

14. Pump according to any one of the preceding claims, **characterized in that** the pump (1) comprises an essentially cylindrical or square pump head (5), one end region of which is provided with an inlet (6) and an outlet (8) for the fluid to be transported and which then continues into a housing (31) receiving the drive (10) in an essentially flush manner on the end region.

15. Pump according to any one of the preceding claims, **characterized in that** the pump (1) is provided in the region of the drive (10) with a position sensor (46) .

16. Pump according to Claim 15, **characterized in that** the position sensor (46) is formed by a Hall sensor.

17. Pump according to one of Claims 1 to 16, **characterized in that** the measurement and control unit (45) is provided in a programmable manner in such a way that the pump (1) with its drive (10) processes similar or different work steps with regard to aspiration and dispersion of the medium to be transported.

18. Arrangement of a plurality of pumps (1) according to any one of the preceding claims, to form a pump system with a number of working spaces (4) corresponding to the number of pumps (1), the inlets and outlets of the said spaces being connected to each other in parallel respectively.

19. Method for operating a pump system with at least one positive displacement pump (1) according to one of Claims 1 to 17, in particular in an arrangement according to Claim 18, wherein a measurement and control unit (45) with a data storage and data processing device is associated with the at least one positive displacement pump (1), **characterized in that** the development of the electrical current over time and the position of the drive (10) of the at least one pump (1) is detected as a measured variable and evaluated to determine the pressure in a working space (4) of the system associated with the at least one pump (1) and the pressure in the working space (4) is determined and saved with the calculable transmission behavior of the displacement element (40).

20. Method according to Claim 19, **characterized in that** the transmission behavior of a diaphragm serving as a displacement element (40) is described using the formula p = c₁F+c₂x, wherein p is the pressure in the working space, F is the connecting-rod force, x is the position of the drive and the constants c₁ and c₂ are dependent on the geometry and the material characteristics of the diaphragm.

21. Method according to Claim 19 or 20, **characterized in that** the transmission behavior of the displacement element (40) is described using the formula p = f (F,x) and thereby, the pressure in the working space (4) is described as a function of the connecting-rod force and the position of the drive (10) in a numeric manner and, in particular, using "finite differences" or "finite methods".

22. Method according to one of Claims 19 to 21, **characterized in that** the pump system with the measurement and control unit (45) forms a control circuit, which is operated with the drive current strength and the position of the mobile part as a measured variable and with the pressure of the working space (4) as a control variable.

23. Method according to one of Claims 19 to 22, **characterized in that** the pressure is determined individually in both transfer directions of the pump (1), meaning when aspirating and dispersing the medium to be transported.

24. Method according to one of Claims 19 to 23, **characterized in that** the pressure of a plurality of pumps (1) associated with a pump system is determined, **characterized in that** each of the pumps (1) can be regulated separately.

25. Method according to one of Claims 19 to 24, **characterized in that** the measurement and control unit (45) compensates for the developments of the pressure deviating from the saved transmission profiles by manipulating the drive (10).

26. Method according to one of Claims 19 to 25, **characterized in that** the transmission behavior of the diaphragm is saved as a target value table by means of a finite element simulation for a number of positions and load cases and **in that** the transmission behavior is determined to calculate the pressure from the stored target values and the interpolations lying in between.

27. Method according to one of Claims 19 to 26, **characterized in that** the progression over time of the pressure for different speeds at the inlet and outlet (6, 8) of the medium to be transported from the working space (4) is determined by the measurement and control unit (45) and, by means of an evaluation unit, parameters of the medium and/or at least one transport device are determined from this progression over time.

## Revendications

1. Pompe volumétrique oscillante (1) comportant au moins une partie mobile (20) qui est disposée de manière déplaçable par rapport à une partie fixe (30) et qui est entraînée au moyen d'un entraînement (10) et qui entraîne elle-même un élément de déplacement (40) de la pompe volumétrique (1), l'entraînement (10) comprenant une pluralité de bobines (41) alimentées en courant et des aimants permanents (42), et la pluralité de bobines (41) ou la pluralité d'aimants permanents (42) étant disposé(e)s respectivement sur la partie mobile (20) de l'entraînement (10), la pluralité de bobines (41) alimentées en courant comportant des sens d'enroulement alternés étant traversées par des champs magnétiques alternatifs, lesquels peuvent être générés ou sont générés par polarisation alternée par une pluralité d'aimants permanents (42) et peuvent être conduits ou sont conduits dans les bobines (41) par l'intermédiaire des pôles magnétiques (24), chaque bobine (41) alimentée en courant apportant une contribution cumulable à la force générée de cette manière dans la direction axiale de l'entraînement (10), au moins un organe de guidage (50a, 50b) étant prévu sur l'entraînement (10), ledit organe de guidage autorisant la partie mobile (20) à se déplacer uniquement suivant un degré de liberté de translation, et une unité de mesure et de commande (45) dotée d'une mémoire de données et d'un dispositif de traitement de données étant associée à la pompe volumétrique, ladite unité traitant un signal de position de la partie mobile (20) et l'intensité du courant d'entraînement en tant que grandeur de mesure et/ou de réglage, **caractérisée en ce que** la pompe volumétrique (1) est conçue en tant que pompe à membrane et son élément de déplacement (40) en tant que membrane, et **en ce que** l'entraînement (10) est conçu, est conçu comme entraînement électrodynamique sans pôles magnétiques autour les bobines.

2. Pompe selon la revendication 1, **caractérisée en ce que** la pompe (1) est conçue en tant que pompes à membrane pour liquide.

3. Pompe selon la revendication 1 ou 2, **caractérisée en ce que** ledit au moins un organe de guidage (50a, 50b) est conçu en tant que guidage à glissement ou en tant qu'élément à ressort (55).

4. Pompe selon l'une quelconque des revendications 1 à 3, **caractérisée en ce que** l'organe linéaire (11) est conçu en tant que barre (21, 22) et/ou l'entourage (12) est conçu en tant que partie en forme d'enveloppe (23) à l'intérieur (25) de laquelle la barre (21, 22) fait saillie.

5. Pompe selon l'une quelconque des revendications 1 à 4, **caractérisée en ce que** l'organe linéaire (11) est pourvu d'aimants permanents (42) à polarités alternées et la partie en forme d'enveloppe (23) est pourvue d'une pluralité de bobines (41).

6. Pompe selon l'une quelconque des revendications précédentes, **caractérisée en ce que** l'organe linéaire (11) forme l'élément mobile (20) et l'entourage (12) forme la partie fixe (30), ou inversement.

7. Pompe selon l'une quelconque des revendications précédentes, **caractérisée en ce que** la partie fixe (30) est reliée de manière fixe à un logement (31) de l'entraînement (10) ou est conçue d'un seul tenant avec ledit logement.

8. Pompe selon l'une quelconque des revendications précédentes, **caractérisée en ce que** la partie mobile (20) et la partie fixe (30) peuvent être reliées entre elles ou sont reliées entre elles par ledit au moins un organe de guidage (50a, 50b).

9. Pompe selon l'une quelconque des revendications précédentes, **caractérisée en ce qu'**une pluralité d'organes de guidage (50a, 50b), en particulier deux organes de guidage (50a, 50b) sont prévus, lesdits organes de guidage reliant entre elles des zones de la partie mobile et de la partie fixe (20, 30) orientées l'une vers l'autre.

10. Pompe selon l'une quelconque des revendications précédentes, **caractérisée en ce que** l'un des organes de guidage (50a, 50b) est intégré dans l'élément de déplacement (40) ou constitue l'élément de déplacement (40).

11. Pompe selon l'une quelconque des revendications précédentes, **caractérisée en ce que** ledit au moins un organe de guidage (50a, 50b) est doté d'une précontrainte mécanique qui agit sur l'élément de déplacement (40) lorsque l'entraînement (10) n'est pas alimenté en courant, de telle sorte qu'une ouverture d'entrée et/ou une ouverture de sortie d'une chambre de travail (4) de la pompe (1) soit fermée.

12. Pompe selon l'une quelconque des revendications précédentes, **caractérisée en ce que**, au niveau de l'entraînement (10), la partie mobile (20) est sollicitée par un ressort (26), de telle sorte que l'élément de déplacement (40) ferme une ouverture d'entrée et/ou une ouverture de sortie d'une chambre de travail (4) de la pompe (1) lorsque l'entraînement n'est pas alimenté en courant.

13. Pompe selon l'une quelconque des revendications précédentes, **caractérisée en ce que** la pluralité de bobines (41) et d'aimants permanents (42) sont respectivement disposés en série.

14. Pompe selon l'une quelconque des revendications précédentes, **caractérisée en ce que** la pompe (1) présente une tête de pompe (5) sensiblement cylindrique ou carrée dont une zone d'extrémité est pourvue d'une entrée (6) et d'une sortie (8) pour le fluide à transporter, ladite tête de pompe se prolongeant ensuite sur la zone d'extrémité de manière sensiblement coplanaire dans un logement (31) recevant l'entraînement (10).

15. Pompe selon l'une quelconque des revendications précédentes, **caractérisée en ce que** la pompe (1) est pourvue d'un capteur de position (46) au niveau de l'entraînement (10).

16. Pompe selon la revendication 15, **caractérisée en ce que** le capteur de position (46) est formé par un capteur à effet Hall.

17. Pompe selon l'une quelconque des revendications 1 à 16, **caractérisée en ce que** l'unité de mesure et de commande (45) est prévue de manière à pouvoir être programmée, de telle sorte que la pompe (1) traite avec son entraînement (10) des opérations différentes ou semblables s'agissant de l'aspiration et de l'évacuation du fluide à transporter.

18. Ensemble d'une pluralité de pompes (1) selon l'une quelconque des revendications précédentes, associé à un système de pompe comportant un nombre de chambres de travail (4) correspondant au nombre de pompes (1), les entrées et les sorties desdites chambres de travail étant reliées respectivement parallèlement entre elles.

19. Procédé de fonctionnement d'un système de pompe comprenant au moins une pompe volumétrique (1), selon l'une quelconque des revendications 1 à 17, en particulier dans un ensemble conformément à la revendication 18, une unité de mesure et de commande (45) dotée d'une mémoire de données et d'un dispositif de traitement de données étant associée à ladite au moins une pompe à membrane (1), **caractérisé en ce que**, pour la détermination de la pression exercée dans une chambre de travail (4) du système associée à ladite au moins une pompe (1), l'évolution dans le temps du courant électrique et de la position de l'entraînement (10) de ladite au moins une pompe (1) est mesurée en tant que grandeur de mesure et est évaluée, et la pression exercée dans la chambre de travail (4) est déterminée avec le comportement de transmission prévisible de l'élément de déplacement (40) et est mise en mémoire.

20. Procédé selon la revendication 19, **caractérisé en ce que** le comportement de transmission d'une membrane servant d'élément de déplacement (40) est décrit par la formule p = c₁F+c₂x, p étant la pression exercée dans la chambre de travail, F la force de la bielle, x la position de l'entrainement et les constantes c₁ et c₂ étant dépendantes de la géométrie et des propriétés des matériaux de la membrane.

21. Procédé selon la revendication 19 ou 20, **caractérisé en ce que** le comportement de transmission de l'élément de déplacement (40) est décrit par la formule p = f (F, x), et par conséquent la pression exercée dans la chambre de travail (4) est décrite numériquement en fonction de la force de la bielle et de la position de l'entraînement (10) et en particulier avec la « Méthode des différences finies » ou la « Méthode des éléments finis ».

22. Procédé selon l'une quelconque des revendications 19 à 21, **caractérisé en ce que** le système de pompe comportant une unité de mesure et de commande (45) forme une boucle de commande qui fonctionne avec l'intensité du courant d'entraînement en tant que grandeur de mesure et avec la pression de la chambre de travail (4) en tant que grandeur de réglage.

23. Procédé selon l'une quelconque des revendications 19 à 22, **caractérisé en ce que** la pression est déterminée individuellement dans les deux dispositifs de transmission de la pompe (1), donc lors de l'aspiration et de l'évacuation du fluide à transporter.

24. Procédé selon l'une quelconque des revendications 19 à 23, **caractérisé en ce que** la pression d'une pluralité de pompes (1) associées à un système de pompe est déterminée, chacune des pompes (1) pouvant être réglée séparément.

25. Procédé selon l'une quelconque des revendications 19 à 24, **caractérisé en ce que** l'unité de mesure et de commande (45) compense par la manipulation de l'entraînement les évolutions de la pression qui divergent des profils de transmission mis en mémoire.

26. Procédé selon l'une quelconque des revendications 19 à 25, **caractérisé en ce que** le comportement de transmission de la membrane est intégré pour un certain nombre de positions et de cas de charge sous la forme d'un tableau de valeurs de consigne au moyen d'une 'Simulation par éléments finis', et **en ce que** le comportement de transmission destiné au calcul de la pression est déterminé à partir des valeurs de consigne définies ou des interpolations intermédiaires.

27. Procédé selon l'une quelconque des revendications 19 à 26, **caractérisé en ce que** l'évolution dans le temps de la pression pour des vitesses différentes lors de l'aspiration et de l'évacuation (6, 8) du fluide à transporter hors de la chambre de travail (4) est déterminée par l'intermédiaire de l'unité de mesure et de commande (45), et les paramètres du fluide et/ou au moins d'un dispositif de transport sont déterminés à partir de cette évaluation dans le temps à l'aide d'une unité d'évaluation.
